# EUROPÄISCHE PATENTSCHRIFT

(11) **EP 1 982 916 B1**
(45) Veröffentlichungstag und Bekanntmachung des Hinweises auf die Patenterteilung: **08.03.2017**
(21) Anmeldenummer: 08007221.8
(22) Anmeldetag: 11.04.2008
(51) Int. Cl.: B64D 45/00

(54) **Vorrichtung zur Überwachung des Gleichlaufs von Klappen eines Flugzeugflügels**
Device for monitoring the synchronism of flaps of an airplane wing
Dispositif de surveillance du synchronisme des volets d'une aile d'avion

(30) Priorität: 18.04.2007 DE 102007018330
(43) Veröffentlichungstag der Anmeldung: 22.10.2008
(73) Patentinhaber: Liebherr-Aerospace Lindenberg GmbH, 88161 Lindenberg/Allgäu (DE)
(72) Erfinder: Schievelbusch, Bernd, 88161 Lindenberg (DE)
(74) Vertreter: Herrmann, Uwe

(56) Entgegenhaltungen:
- EP-A1- 0 726 201
- WO-A1-2009/043568
- DE-A1- 10 223 495
- US-A- 3 169 178
- US-A- 5 680 124
- US-B1- 6 466 141

## Beschreibung

Die vorliegende Erfindung betrifft eine Vorrichtung zur Überwachung des Gleichlaufs einer oder mehrerer Klappen von Flugzeugflügeln, wobei die Vorrichtung einen Seilzug aufweist, der mit den Klappen derart in Verbindung steht, dass der Seilzug der Klappenbewegung folgt.

Flugzeuge sind zur Beeinflussung des Auftriebs und Widerstandsbeiwertes der Flugzeugflügel mit verschiedenen Klappen ausgerüstet, die die aerodynamischen Eigenschaften der Flugzeugflügel in der gewünschten Weise verändern. Im Rahmen der vorliegenden Anmeldung ist unter dem Begriff "Klappe" jedes derartige Bauteil zu verstehen, dass gegenüber festen Strukturbauteilen des Flugzeugflügels beweglich ist und mit dem aerodynamische Eigenschaften beeinflußbar sind. Beispiele sind Vorflügel und Landeklappen.

Beispielsweise ist es erwünscht, dass das Flugzeug für Start und Landung Langsamflugeigenschaften besitzt, während im Reiseflug die Vorflügel und Landeklappen derart positioniert werden müssen, dass Schnellflugeigenschaften realisierbar sind. Während des Betriebes kann der unerwünschte Fall eintreten, dass Störungen im Antriebssystem der Klappen auftreten, die je nach Art der Störung zum Schieflauf (Skewing), zu Ausrichtungsfehlern (Misalignment) oder gar zum Verlust (Loss) einzelner Klappen bzw. Klappensegmente führen können. Dies hat den Nachteil, dass die aerodynamischen Eigenschaften der Flügel in unerwünschter Weise beeinträchtigt werden, beispielsweise durch Rollmomente oder auch durch Folgeschäden nach Verlust der Klappen.

Um derartige unerwünschte Zustände rechtzeitig erkennen zu können, ist es bekannt, den Synchronlauf von Klappen eines Hochauftriebssystems durch einen Seilzugmechanismus zu überwachen. Derartige Systeme sind aus der US 5,680,124 sowie aus der EP 0 726 201 A1 bekannt. Bei den aus diesen Druckschriften bekannten Systemen sind die Seilenden des Seilzuges an den beweglichen, zu überwachenden Klappen angeschlagen. Kommt es zu einer Störung bei der Bewegung einer oder mehrerer Klappen, verlängert sich der Weg zwischen diesen Anschlagspunkten, was durch ein geeignetes Sensorsystem erfaßt werden kann. Ein Nachteil bei dem aus dem Stand der Technik bekannten System besteht darin, dass aufgrund der Anordnung der Seilzuganschlagspunkte auf den Klappen der gesamte Sensormechanismus der Bewegung der Klappen folgen muss. Ein weiterer Nachteil besteht darin, dass bei den aus dem Stand der Technik bekannten Systemen lediglich Bewegungsstörungen zweier benachbarter Klappen eines Flugzeugflügels erkannt werden können. Ein Einsatz des bekannten Systems scheidet aus, sofern pro Flügel nur eine Klappe vorhanden ist bzw. überwacht werden soll.

Schließlich ist es als nachteilig zu nennen, dass durch das bekannte System die Antriebsmechanismen an den äußeren und inneren Klappenenden, d. h. der äußerste und der innerste der Antriebsmechanismen nicht überwachbar sind, da sich der Seilzug nicht bis in deren Bereich erstreckt.

Die US 3,169,178 zeigt eine Vorrichtung zur Überwachung des Gleichlaufs von Klappen eines Flugzeugflügels, das sämtliche Merkmale des Oberbegriffs des Anspruchs 1 aufweist.

In der DE 102 23 495 A1 ist eine Vorrichtung zur Erkennung von residualen Gleichlauffehlern von Klappen in einem Flugzeug beschrieben, wobei ein Leitungsdraht eines elektrischen Kreislaufs durch einen Gleichlauffehler gekappt wird und anhand der sich hieraus ergebenden Wiederstandsänderung auf einen solchen Gleichlauffehler geschlossen wird.

Die EP 0 726 201 A1 zeigt eine Vorrichtung zur Überwachung des Gleichlaufs von Klappen eines Flugzeugs, bei der der Anfangs- und Endpunkt eines Seilzugs an einerFlugzeugklappe angeordnet sind.

Der vorliegenden Erfindung liegt daher die Aufgabe zugrunde, eine Vorrichtung zur Überwachung des Gleichlaufs einer oder mehrerer Klappen eines Flugzeugflügels dahingehend weiterzubilden, dass diese vergleichsweise einfach aufgebaut ist und gegenüber dem aus dem Stand der Technik bekannten System eine erweiterte Funktionalität besitzt.

Diese Aufgabe wird erfindungsgemäß durch eine Vorrichtung mit den Merkmalen des Anspruchs 1 gelöst. Danach ist vorgesehen, dass sich die Verlegungsbahn des Seilzuges von einem ersten Punkt zu einem zweiten Punkt erstreckt, von denen einer oder beide an nicht beweglichen Strukturbauteilen des Flugzeugflügels angeordnet sind. Eine derartige Ausführung einer Überwachungsvorrichtung ermöglicht es, eine Überwachung auch für den Fall vorzunehmen, dass pro Flugzeugflügel nur eine Klappe vorgesehen ist bzw. nur eine Klappe zu überwachen ist. Darüber hinaus kann das System auch zur Überwachung der Klappenenden an Außen- und Innenbords eingesetzt werden, da sich die Verlegungsbahn des Seilzuges auch über die Klappenenden hinaus bis zu den nicht beweglichen Strukturbauteilen erstrecken kann. Insofern weist die erfindungsgemäße Vorrichtung eine funktionelle Verbesserung gegenüber dem bekannten Überwachungssystem auf, ohne dass sich die Komplexität der Überwachungsvorrichtung erhöht.

Ein weiterer Vorteil ergibt sich dadurch, dass das Sensorelement nicht zwingend auf der bewegbaren Klappe angeordnet werden muss, was insofern nachteilig ist, dass die Anbindung der notwendigen elektrischen Leitung zum Sensorelement nicht über den in seiner Ausdehnung veränderlichen Spalt zwischen festen und beweglichen Strukturteilen des Flügels geführt werden muss.

In weiterer Ausgestaltung der Erfindung ist vorgesehen, dass pro Halbflügel, d. h. halbspannweitig jeweils ein oder auch mehrere Seilzüge vorgesehen ist. Sind mehrere Seilzüge pro Halbflügel vorgesehen, können unterschiedliche Gruppen von Klappen oder auch unterschiedliche Einzelklappen getrennt voneinander der Überwachung unterzogen werden.

In weiterer Ausgestaltung der Erfindung ist vorgesehen, dass die Verlegungsbahn des Seilzuges derart verläuft, dass sie sich von einem ersten Punkt durch die eine oder mehreren Klappen zu einem zweiten Punkt derart erstreckt, dass die Länge der Verlegungsbahn im störungsfreien Betrieb der Klappen von der Klappenposition unabhängig ist. Denkbar ist es somit, dass die Länge der Verlegungsbahn im eingefahrenen Zustand der Klappen der Länge der Verlegungsbahn dem ausgefahrenen Zustand der Klappen entspricht oder im wesentlichen entspricht, so dass der Seilzug in beiden Positionen denselben Spannungszustand aufweist. Verläuft jedoch die Bewegung einer Klappe asynchron, beispielsweise weil einer der Antriebsmechanismen oder der Antriebsmechanismus der Klappe nicht oder nicht in der gewünschten Weise arbeitet, ändert sich die Verlegungsbahn in ihrer Länge, so dass der Seilzug gestrafft oder entspannt wird, was durch ein geeignetes Sensorelemente, z. B. einen Schalter, einen Wegsensor und dergleichen in ein elektrisches Signal umgesetzt werden kann, das wiederum beispielsweise Sicherheitsmechanismen des Systems aktiviert. Denkbar ist es beispielsweise, dass ein Signal erzeugt wird, das zum Stopp des Antriebssystems führt und/oder das ein entsprechendes Warnsignal im Cockpit des Flugzeuges erzeugt wird.

Ebenso ist es möglich, dass sich die Länge der Verlegungsbahn im störungsfreien Betrieb der Klappen mit Änderung der Klappenposition um einen bestimmten Betrag ändert. Auch in diesem Fall ist es möglich, dass erfaßt wird, ob bei der Bewegung der Klappen von einer in eine andere Position der genannte bestimmte Betrag der Längenveränderung erreicht wird, der in geeigneter Weise unmittelbar oder mittelbar gemessen werden kann. Ist dies der Fall, würde auf den störungsfreien Betrieb geschlossen. Ist dies nicht der Fall, kann festgestellt werden, dass eine Störung vorliegt, was - wie ausgeführt - zu einem Anhalten des Systems und/oder zur Erzeugung eines Warnsignals führen kann.

In weiterer Ausgestaltung der Erfindung ist vorgesehen, dass der erste Punkt und der zweite Punkt in Bewegungsrichtung der Klappen zueinander versetzt sind. Denkbar ist es beispielsweise, dass einer der Punkte am oder im Bereich der Kante des Flugzeugflügels angeordnet ist und dass der andere der Punkte demgegenüber von der Kante des Flugzeugflügels zurückversetzt ist. Dies ermöglicht es, dass die Verlegungsbahn des Seilzuges unabhängig von der Position und Bewegung der Klappen ist, da beim Ausfahren der Klappen die Verlegungsbahn auf einer Seite der Klappen um den Betrag zunimmt, um den sie auf der anderen Seite der Klappen abnimmt.

Nach der Erfindung ist vorgesehen, dass der Seilzug über Umlenkrollen geführt ist, die an den seitlichen Kanten der Klappen angeordnet sind. Auch ist es denkbar, den Seilzug über Umlenkrollen zu führen, die nicht an den seitlichen Kanten der Klappen angeordnet sind, sondern gegenüber den seitlichen Kanten zurückversetzt sind.

Durch die Wahl des Abstandes zwischen den Umlenkrollen und den Klappenkanten ist es möglich, die Ansprechempfindlichkeit des Systems einzustellen. Je näher sich die Umlenkrollen an der Klappenkante befinden, desto stärker wirkt sich ein asynchroner Klappenverlauf auf die Länge der Verlegungsbahn aus, d. h. umso größer ist die Ansprechempfindlichkeit der Vorrichtung. Somit lässt sich über die Positionierung der Umlenkrollen eine Variation der Ansprechempfindlichkeit einstellen. Denkbar ist es, die Umlenkrollen in ihrer Position variabel auszuführen, um die Ansprechempfindlichkeit individuell einstellen zu können.

In weiterer Ausgestaltung der Erfindung ist vorgesehen, dass der Seilzug über die gesamte Breite oder einen wesentlichen Teil der Breite der Klappen läuft.

In weiterer Ausgestaltung der Erfindung ist vorgesehen, dass der Seilzug des Weiteren über feste Strukturen, wie beispielsweise einen Triebwerksträger geführt ist. Die Vorrichtung gemäß der vorliegenden Erfindung schließt eine derartige Anordnung nicht aus, sondern ermöglicht auch in diesem Fall, den asynchronen Verlauf einer oder mehrerer Klappen zu erfassen.

Dabei kann vorgesehen sein, dass der Seilzug über strukturfeste Umlenkrollen geführt ist. Diese Umlenkrollen dienen dazu, die Verlegungsbahn des Seilzuges um die feste Struktur herum zu verlegen.

Denkbar ist es, dass sich beidseitig der festen Struktur Klappen befinden, mit denen der Seilzug in Verbindung steht bzw. durch die der Seilzug hindurch läuft. Weiterhin kann vorgesehen sein, dass die strukturfesten Umlenkrollen derart angeordnet sind, dass sich die Länge der Verlegungsbahn des Seilzuges von einer der der festen Struktur benachbarten Klappe zu der anderen der der festen Struktur benachbarten Klappe im störungsfreien Betrieb der Klappe nicht oder um einen bestimmten Betrag ändert. Vorgesehen sein kann, dass wenigstens zwei der strukturfesten Umlenkrollen in Bewegungsrichtung der Klappen zueinander versetzt angeordnet sind. Somit ist es möglich, dass sich Länge des Weges zwischen einer dieser strukturfesten Umlenkrollen und der Umlenkrolle der angrenzenden Klappe um den Betrag vergrößert oder verkleinert, in dem sich die Länge des Verlegungsweges von der anderen strukturfesten Rolle zu der Umlenkrolle der dieser benachbarten Klappe verkleinert oder vergrößert. Insgesamt kann somit erreicht werden, dass die Verlegungsbahn auch im Falle strukturfester Umlenkrollen von der Klappenposition unabhängig ist.

Weitere Einzelheiten und Vorteile werden anhand eines in der Zeichnung dargestellten Ausführungsbeispiels erläutert. Es zeigen:
- Figur 1:: die Anordnung des Seilzuges bei eingefahrenen und ausgefahrenen Klappen,
- Figur 2:: eine vereinfachte Darstellung der Anordnung gemäß Figur 1,
- Figur 3:: eine Anordnung des Seilzugssystems mit Synchronfehler einer Klappe bei geringer Ansprechempfindlichkeit,
- Figur 4:: eine Anordnung des Seilzugssystems bei Synchronfehler einer Klappe mit hoher Ansprechempfindlichkeit,
- Figur 5:: eine Anordnung des Seilzugssystems mit Synchronfehler am innenbordseitigen Klappenende beim Einfahren/Ausfahren und
- Figur 6:: eine Anordnung des Seilzugssystems über eine feste Struktur, beispielsweise einen Triebwerksträger.

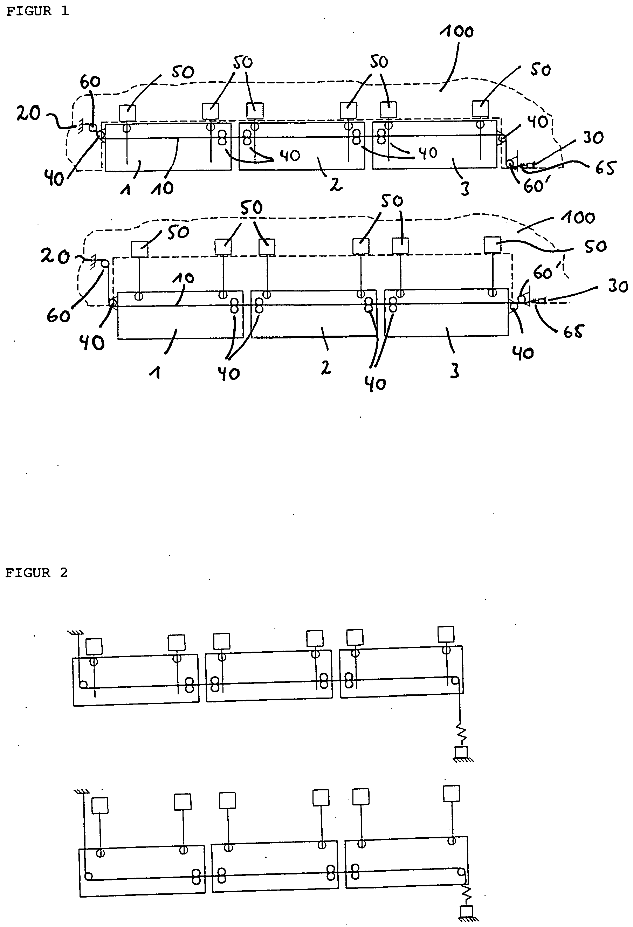

Figur 1 zeigt mit den Bezugszeichen 1, 2, 3 drei nebeneinander angeordnete Klappen, bei denen es sich beispielsweise um Vorflügel oder Landeklappen handeln kann. Figur 1, obere Darstellung zeigt die Klappen 1, 2, 3 im eingefahrenen Zustand. Das Bezugszeichen 100 kennzeichnet den strukturfesten Teil des dargestellten Halbflügels eines Flugzeuges.

Die Verlegungsbahn des Seilzuges 10 verläuft zwischen den Punkten 20, 30, die beide ortsfest, d. h. an strukturfesten Teilen 100 des Flugzeugflügels angeordnet sind. Die Bezugszeichen 40 kennzeichnen Umlenkrollen, die an den Klappen 1, 2, 3 angeordnet sind und mit diesen bewegt werden.

Die Bezugszeichen 50 kennzeichnen schließlich Antriebseinheiten zum Bewegen der Klappen 1, 2, 3, von denen in dem in Figur 1 dargestellten Ausführungsbeispiel pro Klappe zwei vorgesehen sind.

Wie dies des weiteren aus Figur 1 hervorgeht, ist der Seilzug 10 fest mit dem einen Endpunkt 20 der Verlegungsbahn verbunden. Das andere Ende des Seilzuges 10 ist über eine Feder 65 mit dem anderen Endpunkt 30 der Verlegungsbahn verbunden. Dies führt dazu, dass die Länge der Verlegungsbahn in gewissen Grenzen veränderbar ist. Ändert sich die Länge der Verlegungsbahn, führt dies zu einer Belastung oder Entlastung der Feder, was durch geeignete Sensoren gemessen werden kann.

Wie dies des Weiteren aus Figur 1 hervorgeht, sind an dem strukturfesten, d. h. nicht bewegten Strukturbauteil 100 des Halbflügels zwei Umlenkrollen 60, 60' angeordnet, von denen sich eine (60') im Bereich der Flügelkante befindet und die andere (60) demgegenüber zurückversetzt ist. Dies führt dazu, dass sich die Länge der Verlegungsbahn sich beim Ausfahren der Klappen (Figur 1, untere Darstellung) nicht verändert, was wiederum zur Folge hat, dass die Spannung der Feder 65 unverändert bleibt.

Figur 2 zeigt die Anordnung gemäß Figur 1 in einer vereinfachten Darstellung.

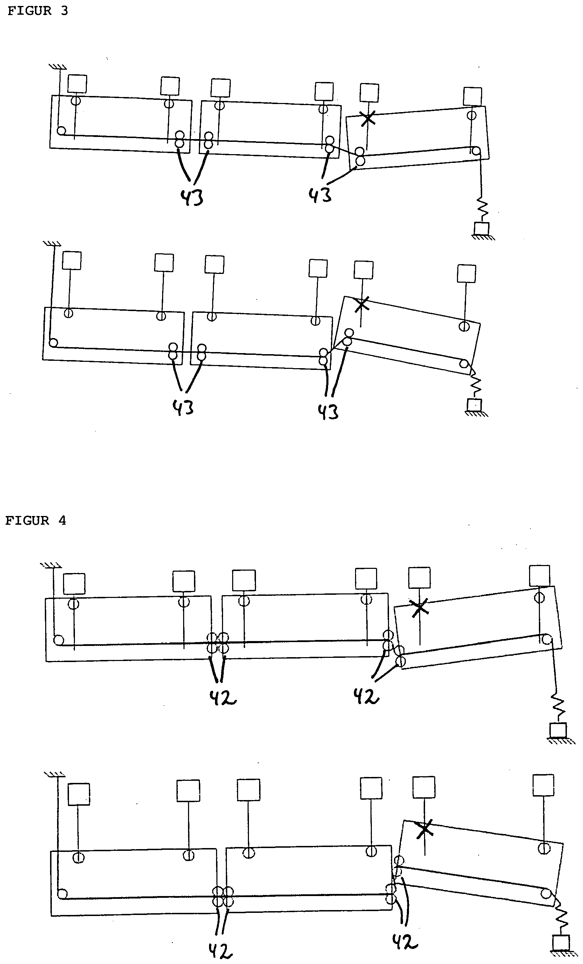

Kommt es zu einem Synchronfehler einer oder mehrerer Klappen 1, 2, 3, ändert sich die Länge der Verlegungsbahn, damit auch die Spannung des Seilzuges 10 und somit auch der Feder 65, was in geeigneter Weise gemessen werden kann. Figur 3 zeigt diesen Zustand, bei dem beim Einfahren bzw. beim Ausfahren ein Synchronfehler der rechts dargestellten Klappe vorliegt. In beiden Fällen ergibt sich gegenüber dem synchronen Zustand gemäß Figur 1 und Figur 2 eine Verlängerung der Verlegungsbahn und somit eine Steigerung der Federkraft, die gemessen werden kann.

Aus Gründen der besseren Übersichtlichkeit sind in den Figuren 3, 4 und 5 die Bezugszeichen weggelassen.

In dem in Figur 3 und in Figur 4 dargestellten Ausführungsbeispiel befinden sich sämtliche Umlenkrollen an den Klappen und nicht an strukturfesten Bauteilen des Flügels. Die Klappen weisen in den zueinander gewandten Endbereichen jeweils Umlenkrollen auf, die gemäß Figur 3 jedoch in einem gewissen Abstand von den Klappenkanten angeordnet sind. Dadurch ergibt sich eine vergleichsweise geringe Ansprechempfindlichkeit, da die Veränderung der Länge der Verlegungsbahn geringer ausfällt, als wenn sich die entsprechenden Umlenkrollen unmittelbar oder näher an der Kante der Klappe befinden, wie dies in Figur 4 der Fall ist. Diese Figur zeigt ebenfalls einen Synchronfehler der rechts dargestellten Klappe beim Einfahren bzw. Ausfahren jedoch mit hoher Ansprechempfindlichkeit des Systems.

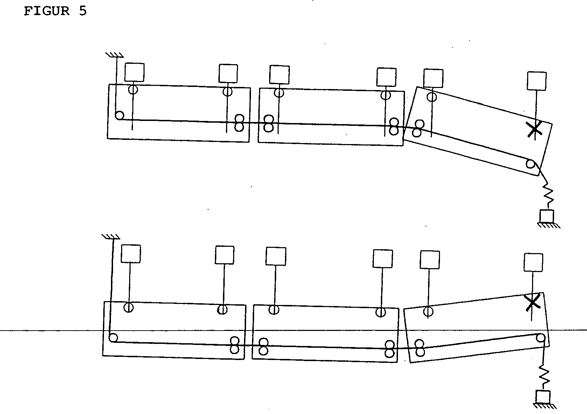

Aufgrund der Tatsache, dass gemäß dem vorliegenden Ausführungsbeispiel wenigstens einer der Endpunkte der Verlegungsbahn ortsfest angeordnet ist, ergibt sich die Möglichkeit, auch Synchronfehler am Klappenende zu erfassen. Ein solches Ausführungsbeispiel ist in Figur 5 dargestellt, bei dem sich an der rechts dargestellten Klappe eine Störung der Antriebseinheit ergibt. In dem hier dargestellten Ausführungsbeispiel liegt die Störung am innenbordseitigen Klappenende der rechts dargestellten Klappe beim Ein- bzw. Ausfahren.

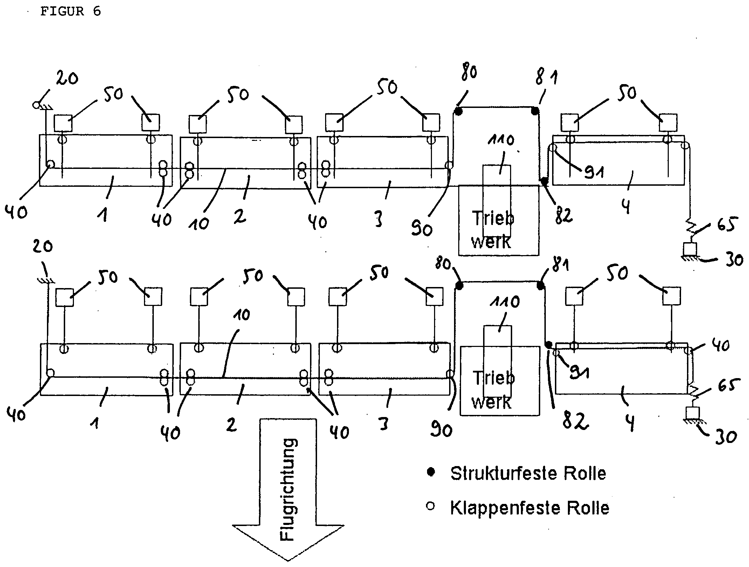

Figur 6 zeigt ein Ausführungsbeispiel der vorliegenden Erfindung, bei der der Seilzug über strukturfeste Rollen 80, 81, 82 geführt ist, die beispielsweise über einen Triebswerksträger 110 verlaufen. Die strukturfesten Rollen sind in Figur 6 mit den Bezugszeichen 80, 81, 82 gekennzeichnet. Beidseitig des Triebwerksträgers 110 befinden sich Klappen 3, 4, wobei die Klappe 4 die innenbordseitige Klappe des dargestellten Halbflügels bildet.

Die Endpunkte 20, 30 der Verlegungsbahn des Seilzuges 10 sind auch in diesem Ausführungsbeispiel ortsfest angeordnet.

Von den zwei strukturfesten Rollen 80, 82 läuft der Seilzug zu einer Umlenkrolle 90, 91 der jeweils benachbarten Klappe 3 oder 4. Dabei sind die Umlenkrollen 90, 91 derart angeordnet, dass sich auf der Seite der Klappe 3 beim Ausfahren der Klappen eine Verlängerung des Weges zwischen der strukturfesten Umlenkrolle 80 und der benachbarten Umlenkrolle 90 der benachbarten Klappe 3 ergibt und auf der Seite der Klappe 4 eine Verkürzung des Weges zwischen der strukturfesten Umlenkrolle 82 und der benachbarten Umlenkrolle 91, wie dies in Figur 6 dargestellt ist. Insgesamt ergibt sich, dass durch die dargestellte Anordnung die Länge der Verlegungsbahn zwischen den zueinander Umlenkrollen 90, 91 über die strukturfesten Umlenkrollen 80, 81, 82 der Klappen 3 und 4 im störungsfreien Betrieb der Anordnung konstant bleibt.

Das Beispiel gemäß Figur 6 zeigt als unbewegliche Struktur einen Triebwerksträger 110. Selbstverständlich ist die Erfindung darauf nicht beschränkt. Es können auch andere stationäre Strukturen, wie Fahrwerksstrukturen oder auch der Flügelrumpf selbst als unbewegliche Strukturen ausgeführt sein. Im letzteren Falle kann das System durch den Flugzeugrumpf zum gegenüberliegenden Halbflügel installiert werden. Dies bedeutet geringste Systemkomplexität (ein Seil, ein Sensor für den gesamten Flügel) und damit höchste Zuverlässigkeit bei geringen Kosten.

## Patentansprüche

1. Vorrichtung zur Überwachung des Gleichlaufs mehrerer Klappen (1, 2, 3, 4) eines Flugzeugflügels, umfassend:
einen Seilzug (10), der mit den Klappen (1, 2, 3, 4) verbindbar ist. dass der Seilzug (10) der Klappenbewegung folgt, wobei
sich die Verlegungsbahn des Seilzuges (10) von einem ersten Punkt (20) zu einem zweiten Punkt (30) erstreckt, von denen einer oder beide an nicht beweglichen Strukturbauteilen des Flugzeugflügels anordnungsbar sind, und
der Seilzug (10) über Umlenkrollen (40, 60, 60', 80, 81, 82) geführt ist,
**dadurch gekennzeichnet, dass**
die Umlenkrollen (40) an den Klappen (1, 2, 3, 4) anordnungsbar sind.

2. Vorrichtung nach Anspruch 1, **dadurch gekennzeichnet, dass** pro Halbflügel jeweils ein Seilzug (10) vorgesehen ist.

3. Vorrichtung nach Anspruch 1 oder 2, **dadurch gekennzeichnet, dass** die Verlegungsbahn des Seilzuges (10) derart verläuft, dass sie sich von dem ersten (20) Punkt durch die eine oder mehreren Klappen (1, 2, 3, 4) zu dem zweiten Punkt (30) derart erstreckt, dass die Länge der Verlegungsbahn im störungsfreien Betrieb der Klappen (1, 2, 3, 4) von der Klappenposition unabhängig ist.

4. Vorrichtung nach Anspruch 1 oder 2, **dadurch gekennzeichnet, dass** die Verlegungsbahn des Seilzuges (10) derart verläuft, dass sie sich von dem ersten Punkt (20) durch die eine oder mehreren Klappen (1, 2, 3, 4) zu dem zweiten Punkt (30) derart erstreckt, dass sich die Länge der Verlegungsbahn im störungsfreien Betrieb der Klappen (1, 2, 3, 4) mit Änderung der Klappenposition um einen bestimmten Betrag ändert.

5. Vorrichtung nach einem der vorhergehenden Ansprüche, **dadurch gekennzeichnet, dass** der erste Punkt (20) und der zweite Punkt (30) in Bewegungsrichtung der Klappen (1, 2, 3, 4) zueinander versetzt sind.

6. Vorrichtung nach einem der vorhergehenden Ansprüche, **dadurch gekennzeichnet, dass** einer der Punkte (20, 30) an oder im Bereich der Kante des Flugzeugflügels anordnungsbar ist.

7. Vorrichtung nach einem der vorhergehenden Ansprüche, **dadurch gekennzeichnet**, die Umlenkrollen (40) an den seitlichen Kanten der Klappen (1, 2, 3, 4) angeordnenbar sind.

8. Vorrichtung nach einem der Ansprüche 1 bis 6, **dadurch gekennzeichnet, dass** die Umlenkrollen (40) von den seitlichen Kanten der Klappen (1, 2, 3, 4) zurückversetztbar sind.

9. Vorrichtung nach einem der vorhergehenden Ansprüche, **dadurch gekennzeichnet, dass** der Seilzug (10) über die gesamte Breite oder einen wesentlichen Teil der Breite der Klappen (1, 2, 3, 4) läuft.

10. Vorrichtung nach einem der vorhergehenden Ansprüche, **dadurch gekennzeichnet, dass** der Seilzug (10) über feste Strukturen geführt ist.

11. Vorrichtung nach Anspruch 10, **dadurch gekennzeichnet, dass** der Seilzug (10) über strukturfeste Umlenkrollen (60, 60', 80, 81, 82) geführt ist.

12. Vorrichtung nach Anspruch 10 oder 11, **dadurch gekennzeichnet, dass** sich beidseitig der festen Struktur Klappen (3, 4) befinden, mit denen der Seilzug (10) in Verbindung steht.

13. Vorrichtung nach Anspruch 12, **dadurch gekennzeichnet, dass** die strukturfesten Umlenkrollen (60, 60') derart angeordnet sind, dass sich die Länge der Verlegungsbahn des Seilzuges (10) von einer der der festen Struktur benachbarten Klappe (3) zu der anderen der der festen Struktur benachbarten Klappe (4) im störungsfreien Betrieb der Klappen (3, 4) nicht oder um einen bestimmten Betrag ändert.

14. Vorrichtung nach einem der Ansprüche 11 bis 13, **dadurch gekennzeichnet, dass** wenigstens zwei der strukturfesten Umlenkrollen (60, 60', 80, 81, 82) in Bewegungsrichtung der Klappen (1, 2, 3, 4) zueinander versetzt angeordnet sind.

15. Vorrichtung nach Anspruch 14, **dadurch gekennzeichnet, dass** im eingefahrenen Zustand der Klappen (1, 2, 3, 4) eine strukturfeste Umlenkrolle (60, 80) gegenüber der benachbarten Umlenkrolle (40 ,90) der benachbarten Klappe (1, 3) zurückversetzt ist und dass eine weitere strukturfeste Umlenkrolle (60', 82) gegenüber der benachbarten Umlenkrolle (40, 91) der benachbarten Klappe (3, 4) in Richtung der Bewegung der Klappen (1, 2, 3, 4) versetzt ist.

## Claims

1. A device for monitoring the synchronism of a plurality of flaps (1, 2, 3, 4) of an aircraft wing comprising:
a control cable (10) which can be connected with the flaps (1, 2, 3, 4) such that the control cable (10) follows the flap movement, wherein
the path of installation of the control cable (10) extends from a first point (20) to a second point (30), one or both of which can be arranged on non-movable structural components of the aircraft wing, and
the control cable (10) is guided over deflection rollers (40, 60, 60', 80, 81, 82),
**characterized in that**
the deflection rollers (40) can be arranged at the flaps (1, 2, 3, 4).

2. The device according to claim 1, **characterized in that** for each half wing one control cable (10) is provided.

3. The device according to claim 1 or 2, **characterized in that** the path of installation of the control cable (10) extends such that it extends from the first point (20) through the one or more flaps (1, 2, 3, 4) to the second point (30) such that in the trouble-free operation of the flaps (1, 2, 3, 4) the length of the path of installation is independent of the flap position.

4. The device according to claim 1 or 2, **characterized in that** the path of installation of the control cable (10) extends such that it extends from the first point (20) through the one or more flaps (1, 2, 3, 4) to the second point (30) such that in the trouble-free operation of the flaps (1, 2, 3, 4) the length of the path of installation is changed by a certain amount with a change in the flap position.

5. The device according to any of the preceding claims, **characterized in that** the first point (20) and the second point (30) are offset with respect to each other in the direction of movement of the flaps (1, 2, 3, 4).

6. The device according to any of the preceding claims, **characterized in that** one of the points (20, 30) can be arranged at or in the vicinity of the edge of the aircraft wing.

7. The device according to any of the preceding claims, **characterized in that** the deflection rollers (40) can be arranged at the lateral edges of the flaps (1, 2, 3, 4).

8. The device according to any of claims 1 to 6, **characterized in that** control the deflection rollers (40) can be set back from the lateral edges of the flaps (1, 2, 3, 4).

9. The device according to any of the preceding claims, **characterized in that** the control cable (10) runs over the entire width or an essential part of the width of the flaps (1, 2, 3, 4).

10. The device according to any of the preceding claims, **characterized in that** the control cable (10) is guided over fixed structures.

11. The device according to claim 10, **characterized in that** the control cable (10) is guided over structure-mounted deflection rollers (60, 60', 80, 81, 82).

12. The device according to claim 10 or 11, **characterized in that** on both sides of the fixed structure flaps (3, 4) are located, with which the control cable (10) is connected.

13. The device according to claim 12, **characterized in that** the structure-mounted deflection rollers (60, 60') are arranged such that in the trouble-free operation of the flaps (3, 4) the length of the path of installation of the control cable (10) from one flap (3) adjoining the fixed structure to the other flap (4) adjoining the fixed structure is not changed or is changed by a certain amount.

14. The device according to any of claims 11 to 13, **characterized in that** at least two of the structure-mounted deflection rollers (60, 60', 80, 81, 82) are arranged offset with respect to each other in the direction of movement of the flaps (1, 2, 3, 4).

15. The device according to claim 14, **characterized in that** in the retracted condition of the flaps (1, 2, 3, 4) a structure-mounted deflection roller (60, 80) is set back with respect to the adjacent deflection roller (40, 90) of the adjacent flap (1, 3), and that a further structure-mounted deflection roller (60', 82) is offset with respect to the adjacent deflection roller (40, 91) of the adjacent flap (3, 4) in the direction of movement of the flaps (1, 2, 3, 4).

## Revendications

1. Dispositif de surveillance du synchronisme de plusieurs volets (1, 2, 3, 4) d'une aile d'avion, comprenant :
un dispositif de transmission par câble (10), qui peut être relié aux volets (1, 2, 3, 4) de sorte que le dispositif de transmission par câble (10) suit le mouvement des volets, le chemin de pose du dispositif de transmission par câble (10) s'étendant d'un premier point (20) à un second point (30), dont un ou les deux peuvent être disposés sur des éléments de structure non mobiles de l'aile d'avion, et le dispositif de transmission par câble (10) étant guidé par le biais de poulies de renvoi (40, 60, 60', 80, 81, 82), **caractérisé en ce que**
les poulies de renvoi (40) peuvent être disposées sur les volets (1, 2, 3, 4).

2. Dispositif selon la revendication 1, **caractérisé en ce qu'**un dispositif de transmission par câble (10) est prévu respectivement par demi-aile.

3. Dispositif selon la revendication 1 ou 2, **caractérisé en ce que** le chemin de pose du dispositif de transmission par câble (10) a un parcours tel qu'il s'étend du premier point (20) au second point (30) en passant par le ou les plusieurs volets (1, 2, 3, 4), de telle manière que la longueur du chemin de pose est indépendante de la position des volets lors du fonctionnement sans dérangement des volets (1, 2, 3, 4).

4. Dispositif selon la revendication 1 ou 2, **caractérisé en ce que** le chemin de pose du dispositif de transmission par câble (10) a un parcours tel qu'il s'étend du premier point (20) au second point (30) en passant par le ou les plusieurs volets (1, 2, 3, 4), de telle manière que la longueur du chemin de pose est modifiée d'une valeur définie avec un changement de la position des volets lors du fonctionnement sans dérangement des volets (1, 2, 3, 4).

5. Dispositif selon l'une des revendications précédentes, **caractérisé en ce que** le premier point (20) et le second point (30) sont décalés entre eux dans la direction de mouvement des volets (1, 2, 3, 4).

6. Dispositif selon l'une des revendications précédentes, **caractérisé en ce qu'**un des points (20, 30) peut être disposé sur le bord ou dans la zone du bord de l'aile d'avion.

7. Dispositif selon l'une des revendications précédentes, **caractérisé en ce que** les poulies de renvoi (40) peuvent être disposées sur les bords latéraux des volets (1, 2, 3, 4).

8. Dispositif selon l'une des revendications 1 à 6, **caractérisé en ce que** les poulies de renvoi (40) peuvent être mises en retrait par rapport aux bords latéraux des volets (1, 2, 3, 4).

9. Dispositif selon l'une des revendications précédentes, **caractérisé en ce que** le dispositif de transmission par câble (10) s'étend sur toute la largeur ou une partie substantielle de la largeur des volets (1, 2, 3, 4).

10. Dispositif selon l'une des revendications précédentes, **caractérisé en ce que** le dispositif de transmission par câble (10) est guidé par le biais de structures fixes.

11. Dispositif selon la revendication 10, **caractérisé en ce que** le dispositif de transmission par câble (10) est guidé par le biais de poulies de renvoi (60, 60', 80, 81, 82) fixées à demeure sur la structure.

12. Dispositif selon la revendication 10 ou 11, **caractérisé en ce que** des volets (3, 4), avec lesquels le dispositif de transmission par câble (10) est en liaison, se trouvent des deux côtés de la structure fixe.

13. Dispositif selon la revendication 12, **caractérisé en ce que** les poulies de renvoi (60, 60') fixées à demeure sur la structure sont disposées de telle manière que la longueur du chemin de pose du dispositif de transmission par câble (10) de l'un des volets (3) adjacents à la structure fixe à l'autre des volets (4) adjacents à la structure fixe n'est pas modifiée ou est modifiée selon une valeur définie lors du fonctionnement sans dérangement des volets (3, 4).

14. Dispositif selon l'une des revendications 11 à 13, **caractérisé en ce qu'**au moins deux des poulies de renvoi (60, 60', 80, 81, 82) fixées à demeure sur la structure sont disposées décalées entre elles dans la direction de mouvement des volets (1, 2, 3, 4).

15. Dispositif selon la revendication 14, **caractérisé en ce que**, dans l'état rentré des volets (1, 2, 3, 4) une poulie de renvoi (60, 80) fixée à demeure sur la structure est en retrait par rapport à la poulie de renvoi (40, 90) adjacente du volet (1, 3) adjacent et **en ce qu'**une autre poulie de renvoi (60', 82) fixée à demeure sur la structure est décalée par rapport à la poulie de renvoi (40, 91) adjacente du volet (3, 4) adjacent dans la direction du mouvement des volets (1,2,3,4).
